# EUROPÄISCHE PATENTSCHRIFT

(11) **EP 3 539 911 B1**
(45) Veröffentlichungstag und Bekanntmachung des Hinweises auf die Patenterteilung: **12.02.2025**
(21) Anmeldenummer: 18206898.1
(22) Anmeldetag: 19.11.2018
(51) Int. Cl.: B65G 53/52, F04C 2/107, B65G 53/08

(54) **VERFAHREN ZUR FÖRDERUNG VON PASTÖSEM MATERIAL**
METHOD FOR CONVEYING PASTY MATERIAL
MÉTHODE DE TRANSPORT DE LA MATIÈRE PÂTEUSE

(30) Priorität: 16.03.2018 DE 102018106228
(43) Veröffentlichungstag der Anmeldung: 18.09.2019
(73) Patentinhaber: Seepex GmbH, 46240 Bottrop (DE)
(72) Erfinder: Rickers, Sebastian, 46119 Oberhausen (DE); Mottyll, Stephan, 44651 Herne (DE)
(74) Vertreter: Andrejewski - Honke Patent- und Rechtsanwälte Partnerschaft mbB

(56) Entgegenhaltungen:
- EP-A1- 0 060 135
- CH-A- 442 029
- DE-A1- 102014 112 550
- DE-A1- 2 259 125
- DE-A1- 3 319 076
- DE-C- 874 877
- JP-A- 2007 126 276
- JP-A- 2013 112 456
- JP-A- H0 543 050
- JP-A- S5 623 124
- US-A- 4 286 935

## Beschreibung

Die Erfindung betrifft ein Verfahren zur Förderung von pastösem Material, z. B. Schlamm oder zerkleinerten Lebensmittelabfällen oder dergleichen, mit einer Anlage, welche eine Exzenterschneckenpumpe umfasst, die einen Stator, einen in dem Stator rotierenden Rotor, ein an den Stator (saugseitig) angeschlossenes Sauggehäuse mit Einfüllöffnung und vorzugsweise ein an den Stator (druckseitig) angeschlossenes Druckgehäuse mit Auslassöffnung aufweist.

Bei einer solchen Exzenterschneckenpumpe handelt es sich um eine Pumpe aus der Gruppe der rotierenden Verdrängerpumpen, die zur Förderung unterschiedlichster Medien und insbesondere hochviskoser Flüssigkeiten in unterschiedlichsten Industriebereichen verwendet werden, wobei die zu fördernden Medien bzw. Flüssigkeiten häufig hohe Feststoffanteile enthalten. Im Rahmen der vorliegenden Erfindung dient die Exzenterschneckenpumpe der Förderung von pastösem Material und folglich hochviskosen Flüssigkeiten mit (hohen) Feststoffanteilen.

Der Stator besteht z. B. aus elastischem bzw. elastomerem Material und ist in der Regel von einem einteiligen oder mehrteiligen Statormantel bzw. Statorgehäuse umgeben. Die Exzenterschneckenpumpe weist einen Antrieb für den Rotor und bevorzugt eine im Sauggehäuse angeordnete Kuppelstange auf, die bevorzugt über ein antriebsseitiges Gelenk mit einer antriebsseitigen Welle und über ein rotorseitiges Gelenk mit dem Rotor verbunden ist, wobei die Kuppelstange die Exzentrität für die rotierende Bewegung des Rotors realisiert. Bevorzugt wird eine Exzenterschneckenpumpe als Trichterpumpe verwendet, bei welcher an die Einfüllöffnung ein Einfülltrichter angeschlossen ist. Bei einer solchen Ausführungsform für die Förderung von pastösem bzw. hochviskosen Medien mit Feststoffanteil ist die Kuppelstange bevorzugt mit Förderwerkzeugen ausgerüstet, z. B. mit einer Förderschnecke oder mit Förderpaddeln, welche den Transport des Materials aus dem Bereich der Einfüllöffnung in den Bereich des Rotors unterstützen.

In der Praxis besteht das Bedürfnis, pastöses Material bzw. Medien, z. B. entwässerte Schlämme, über lange Distanzen zu transportieren und dieses stellt große Herausforderungen, z. B. an die kommunale Abwasseraufbereitung, da aufgrund der hohen Viskosität und Abrasivität dieses Materials/Mediums ein erheblicher Druckverlust in der Förderleitung überwunden werden muss. Diese Druckverluste skalieren direkt mit der Länge der Förderstrecke, was eine Förderung über Distanzen im Bereich von Kilometern extrem erschwert. Die üblicherweise verwendeten Pumpenlösungen müssen hohe Drücke aufbauen, um die Druckverluste zu überwinden, so dass sie über ihre Druckstufe auf eine maximale Förderstrecke limitiert sind. Zudem ist die Belastung der Pumpen bei hohem Gegendruck sehr groß, wodurch sich aufgrund des Verschleißes der Rotor-Stator-Geometrie und/oder der Gelenke häufige Wartungszyklen ergeben, die zeit- und kostenaufwendig sind. Beim Einsatz von Exzenterschneckenpumpen für solche langen Förderstrecken müssen dementsprechend große, schwere Exzenterschneckenpumpen mit erheblichem Wartungsaufwand und entsprechenden Kosten eingesetzt werden.

Alternativ werden in der Praxis sequentielle Förderlösungen mit mehreren Antrieben eingesetzt, wie z. B. Förderbänder oder Schneckenförderer. Nachteilig sind dabei zum einen der hohe Energieverbrauch und Wartungsaufwand und zum anderen auch häufig eine offene Bauweise mit entsprechender Geruchsbelästigung oder auch Wiederverwässerung (getrockneter Schlämme) durch Regen. Bei vertikalem oder verwinkeltem Transport sind solche Förderlösungen ebenfalls ineffizient. Der Einsatz geschlossener Rohrleitungen setzt in der Regel die Verwendung mehrstufiger Exzenterschneckenpumpen oder alternativ auch Kolbenpumpen voraus, die sich für hochviskose Medien und hohe Drücke eignen, jedoch aufgrund des hohen Gegendrucks eine relativ hohe Antriebsleistung und damit einen hohen Energieverbrauch und auch einen hohen Wartungsaufwand implizieren.

Ferner ist aus der Praxis eine pneumatische Förderung und insbesondere auch eine sogenannte Pfropfenförderung bekannt, die jedoch vor allem für den Transport von (losen) Schüttgütern verwendet wird. Ein solches Verfahren und eine Vorrichtung zur pneumatischen Förderung von Schüttgut ist z. B. aus der WO 01/02274 A2 bekannt. Dabei soll das Schüttgut von einem niedrigen zu einem höheren Niveau gefördert werden, wobei das Schüttgut zuerst im Wesentlichen horizontal gefördert, anschließend pneumatisch angehoben und nachfolgend pneumatisch weitergefördert wird. Die erste Förderung erfolgt dabei in Form diskreter, durch Gaspolster beabstandeter Schüttgutpfropfen und das Anheben des Schüttguts in Form eines weitgehend kontinuierlichen Schüttgutstroms.

Eine Förderanlage mit einer Rohrleitung für den fluidischen Transport kurzer, gleichartiger Materialpfropfen eines körnigen oder pulverförmigen Materials ist z. B. auch aus der DE 33 19 076 A1 bekannt. Diese Anlage besteht aus einer Förderleitung und aus zu dieser parallelen Abzweigleitungen. Außerdem ist eine Einspeisevorrichtung (z. B. Pumpe) vorgesehen, die eine Dichtungseinrichtung gegenüber dem durch eine Fluiddruckquelle hervorgerufenen Rohrleitungsdruck aufweist. Die Einspeisevorrichtung kann grundsätzlich auch als Exzenterschneckenpumpe mit Rotor und Stator ausgebildet sein. Der Pumpe ist in jedem Fall eine Materialaufnahmekammer nachgeschaltet, an deren Beginn ein Anschluss für die Fluiddruckquelle vorgesehen ist, so dass sich die Förderleitung über die eingangsseitige Aufnahmekammer kontinuierlich mit Fluiddruck beaufschlagen lässt. Zusätzlich ist in der nachfolgenden Förderleitung für den Materialpfropfentransport wenigstens eine Öffnung für den Eintritt einer Teilmenge des Fluids in die Förderleitung vorgesehen. Beim Einsatz einer Exzenterschneckenpumpe wird im Übrigen vorgeschlagen, in der ausgangsseitigen Aufnahmekammer eine Zellradschleuse vorzusehen, die nicht nur zur besseren Abdichtung der Pumpe gegenüber dem in der Förderleitung herrschenden Druck dienen soll, sondern auch das aus der Pumpe auftretende Material zerkleinern soll.

Einrichtungen zum Fördern von feuchtem und breiigem Gut in Rohrleitungen im Sinne eines Pfropfentransportes sind im Übrigen aus der DE 874 877 und der DE 559 237 bekannt.

Die JP 2013 112456 A offenbart ein Verfahren zur Förderung von pastösem Material, mit einer Anlage, welche einen Schneckenförderer mit Einfüllöffnung und eine Auslassöffnung aufweist. Die Anlage umfasst zudem eine pneumatischen Förderleitung, die derart an die Auslassöffnung des Schneckenförderers angeschlossen ist, dass das zu fördernde Material mit dem Schneckenförderer als Materialstrang in die Förderleitung gedrückt wird. An die Förderleitung ist über ein gesteuertes Ventil eine Druckmedienzufuhr angeschlossen, wobei das Ventil derart gesteuert wird, dass in zeitlichen Abständen Druckpulse mit vorgegebener Dauer in die Förderleitung injiziert werden, welche vom Materialstrang Materialpfropfen begrenzter Länge abtrennen und diese durch die Förderleitung transportieren.

Schließlich beschreibt die DE 42 03 571 A1 eine mobile Vorrichtung zur Erzeugung von Leichtbeton mit einem Schneckenmischer und einer Schneckenpumpe, an die über eine Verbindungsleitung eine unter Druck stehende Kammer einer Druckluft-Misch- und Fördermaschine angeschlossen ist.

Ausgehend von dem vorbekannten Stand der Technik liegt der Erfindung das technische Problem zugrunde, ein Verfahren mit einer Anlage zu schaffen, die bei kostengünstigem und wartungsarmen Aufbau eine einwandfreie und effiziente Förderung von pastösem Material auch über lange Distanzen ermöglicht.

Zur Lösung dieser Aufgabe lehrt die Erfindung ein Verfahren nach Anspruch 1.

Die Erfindung geht dabei von der Erkenntnis aus, dass sich durch Kombination einer Exzenterschneckenpumpe und einer sogenannten pneumatischen Dichtstromförderung pastöses Material, d. h. hochviskose Flüssigkeiten bzw. Medien, wirtschaftlich und effizient auch über große Distanzen transportieren lassen, ohne dass besonders große Exzenterschneckenpumpen zum Einsatz kommen müssen. Das Material wird mit der Exzenterschneckenpumpe unter Bildung eines komprimierten (kontinuierlichen) Materialstrangs unmittelbar in die Förderleitung gepresst. Mit der in die Förderleitung integrierten Druckmedienzufuhr werden in zeitlichen Abständen Druckpulse in die Förderleitung injiziert und dadurch Materialpfropfen von dem Materialstrang abgetrennt und diese Materialpfropfen werden mithilfe der Druckpulse bzw. des in der Förderleitung entstehenden Druckes in der Förderleitung entlang der Förderrichtung (beabstandet zueinander) transportiert. Dabei erfolgt keine dauerhafte Beaufschlagung der Förderleitung mit Druckmedium, z. B. Druckluft, sondern es werden lediglich in der Förderleitung die beschriebenen Druckpulse erzeugt, die aufgrund der Konstruktion grundsätzlich sowohl in Förderrichtung als auch entgegen der Förderrichtung und folglich in Richtung der Pumpe wirken. Da sich die Exzenterschneckenpumpe jedoch durch eine geschlossene Dichtlinie auszeichnet und das Material aus der Exzenterschneckenpumpe komprimiert und folglich unter Druck in die Förderleitung gedrückt wird, können die in die Förderleitung eintretenden Druckpulse lediglich in Förderrichtung "ausweichen" und damit die entstehenden Materialpfropfen - unterstützt durch die Wirkung der Exzenterschneckenpumpe - in Förderrichtung transportieren. Es liegt im Übrigen im Rahmen der Erfindung, nicht nur eine Druckmedienzufuhr vorzusehen, bzw. nicht nur an einer Stelle bzw. mit einem Ventil ein Druckmedium in die Förderleitung zu injizieren, sondern optional besteht auch die Möglichkeit, Druckpulse an mehreren Stellen und insbesondere mehreren über die Länge der Förderleitung verteilten Stellen in die Förderleitung zu injizieren, z. B. über mehrere Ventile, die über die Länge der Förderleitung verteilt sind.

Bevorzugt ist an die Förderleitung eine Druckmesseinrichtung angeschlossen. Außerdem weist die Anlage eine Steuereinrichtung auf, die it dem Ventil der Druckmedienzufuhr und andererseits vorzugsweise mit der Druckmesseinrichtung verbunden ist, so dass mit der Steuereinrichtung das Ventil in Abhängigkeit von dem mit der Druckmesseinrichtung gemessenen Druck in der Förderleitung steuerbar ist. Im Betrieb wird folglich das pastöse Material mit der Exzenterschneckenpumpe in der Druckleitung komprimiert, so dass der mit der Druckmesseinrichtung gemessene Druck in der Förderleitung nach und nach ansteigt. Bei Erreichen oder Überschreiten eines vorgegebenen Druckschwellwertes, der z. B. in der Steuereinrichtung hinterlegt sein kann, wird das Ventil geöffnet und der auf diese Weise in die Förderleitung injizierte Druckpuls trennt den Materialpfropfen ab und fördert ihn entlang der Förderrichtung durch die Förderleitung. Während der Druckmedieninjektion steigt der Druck kurzzeitig an, sinkt dann jedoch mit dem Abtrennen des Schlammpfropfens sofort wieder ab. Durch das erneute, kontinuierliche Zuführen des Materials mit der Exzenterschneckenpumpe steigt der Druck in der Förderleitung (langsam) wieder an, bis eine weitere Druckmedieninjektion erfolgt.

In Abhängigkeit von den Eigenschaften des zu fördernden pastösem Materials, kann es vorteilhaft sein, die Förderung durch eine gleichzeitige Gleitmittelinjektion zur Reduzierung der Rohrreibung zu unterstützen und auf diese Weise den Druck in der gesamten Förderleitung dauerhaft auf ein sehr niedriges Druckniveau abzusenken, unterhalb von 5 bar, vorzugsweise unterhalb von 4 bar. Der Einsatz eines solchen Gleitmittels ist z. B. bei der Förderung von Schlamm und insbesondere getrocknetem Schlamm vorteilhaft. Dazu ist bevorzugt vorgesehen, dass an die Förderleitung eine Gleitmittelzufuhr angeschlossen ist, und zwar vorzugsweise zwischen der Exzenterschneckenpumpe und der Druckmedienzufuhr (der Mündung der Zufuhr in die Förderleitung). Mit dieser Gleitmittelzufuhr (vor der Druckmedienzufuhr) kann vorzugsweise kontinuierlich (oder quasi kontinuierlich) ein Gleitmittel in die Druckleitung bzw. in den Bereich des Materialstrangs injiziert werden. Auf diese Weise wird das Material und damit auch der Materialpfropfen zusätzlich mit einem Gleitmittel ummantelt und auf diese Weise die Rohrreibung für die Dichtstromförderung reduziert, so dass die Energieeffizienz des Gesamtsystems optimiert wird. Bei dem Gleitmittel kann es sich z. B. um eine bekannte Polymerlösung handeln. Alternativ kann als Gleitmittel aber auch Wasser zum Einsatz kommen. Im Übrigen besteht die Möglichkeit, das Gleitmittel über den Umfang verteilt in die Förderleitung zu injizieren, z. B. mit mehreren über den Umfang verteilten Injektionsstellen, so dass eine umfassende Gleitmittelschicht bzw. eine den Materialpfropfen umgebende Gleitmittelschicht (boundary layer) erzeugt wird.

Durch die Kombination von (Exzenterschnecken-)Pumpenförderung und pneumatischer Dichtstromförderung reduziert sich der Druck in der gesamten Förderleitung dauerhaft auf ein sehr niedriges Druckniveau. Dieses Druckniveau resultiert direkt aus der erforderlichen Kraft zum initialen Bewegen des Materialpfropfens. Sobald die Haftreibkraft einmal überwunden ist, wird der Materialpfropfen durch die nachströmende und expandierende Druckluft (Druckmedium) beschleunigt, wodurch das Druckniveau in der Leitung wieder absinkt. Optional kann über die Variation der verwendeten Menge an Gleitmittel, z. B. Polymerlösung, und der Materialpfropfenlänge bzw. dessen Gewicht das maximale Druckniveau in der Leitung beeinflusst werden und somit - im Zuge der Inbetriebnahme - ein energietechnisch optimaler Betriebspunkt eingestellt werden.

Grundsätzlich liegt es auch im Rahmen der Erfindung, ohne zusätzliche Gleitmittelzufuhr zu arbeiten, und zwar insbesondere dann, wenn das verwendete Material dieses zulässt. So kann z. B. bei der Förderung von zerkleinerten Lebensmittelabfällen, die erfindungsgemäß ebenfalls in Betracht kommt, aufgrund der guten Reibeigenschaften auf entsprechende Gleitmittel verzichtet werden.

Bevorzugt ist die Exzenterschneckenpumpe als Trichterpumpe ausgebildet, wobei an die Einfüllöffnung ein Einfülltrichter angeschlossen ist. Bei einer solchen Trichterpumpe ist bevorzugt vorgesehen, dass die Kuppelstange, welche zwischen Antrieb und Rotor angeordnet ist und die Exzentrität realisiert, mit Förderwerkzeugen ausgerüstet ist, z. B. mit einer Förderschnecke oder mit Paddeln oder dergleichen.

Durch die erfindungsgemäße Kombination von Pumpenförderung und pneumatischer Dichtstromförderung (gegebenenfalls mit gleichzeitiger Gleitmittelinjektion) kann der Druck in der gesamten Förderleitung - wie bereits erwähnt - dauerhaft auf ein sehr geringes Druckniveau abgesenkt werden, unterhalb von 5 bar, vorzugsweise unterhalb von 4 bar. Darauf aufbauend schlägt die Erfindung in besonders bevorzugter Ausführungsform den Einsatz entsprechend kleiner, wartungsoptimierter Exzenterschneckenpumpen vor. Dabei handelt es sich um Exzenterschneckenpumpen, bei denen sich der elastische Stator ohne Entfernen des Sauggehäuses und ohne Entfernen des Druckgehäuses einfach und schnell austauschen lässt und/oder bei denen sich der Rotor ohne Entfernen des Sauggehäuses und ohne Entfernen des Druckgehäuses einfach und schnell austauschen lässt, vorzugsweise auch ohne den Einsatz von zusätzlichem Gerät. Solche wartungsoptimierten Pumpen sind in der Praxis in der Regel für verhältnismäßig niedrige Drücke ausgelegt. Das erfindungsgemäße Konzept, bei dem das Druckniveau in der Förderleitung auf verhältnismäßig niedrige Werte begrenzt ist, ermöglicht nun den Einsatz genau solcher wartungsoptimierter Pumpen, so dass der Kombination einer solchen Exzenterschneckenpumpe mit der pneumatischen Dichtstromförderung als Pfropfenförderung besondere Bedeutung zukommt. Das niedrige Druckniveau erhöht die Lebensdauer der Komponenten, so dass sich Wartungsintervalle aufgrund der geringeren Belastung der Komponenten vergrößern lassen. Außerdem wird der Wartungsaufwand reduziert, da Statorwechsel und/oder Rotorwechsel ohne Leitungsdemontage in kurzer Zeit und in der Regel ohne zusätzliche Hebe- und Krananlagen durchgeführt werden kann.

Für einen einfachen Stator- und/oder Rotorwechsel kommt insbesondere eine Exzenterschneckenpumpe in Betracht, bei der der (elastische) Stator als längsgeteilter Stator aus zumindest zwei Statorteilschalen besteht. Außerdem kann der den elastischen Stator umgebende Statormantel als längstgeteilter Mantel aus mehreren Mantelsegmenten bestehen, die gegebenenfalls eine Statorspannvorrichtung für den elastischen Stator bilden. Eine solche Exzenterschneckenpumpe ist z. B. aus der DE 10 2008 021 920 A1, DE 10 2010 037 440 B4, DE 10 2014 112 552 B4 oder DE 10 2014 112 550 B4 bekannt. Bevorzugt kann auf derartige Exzenterschneckenpumpen zurückgegriffen werden. Für einen einfachen Austausch des Rotors wird bevorzugt eine Ausführungsform vorgeschlagen, bei der sich der Rotor unabhängig von den Gelenken der Kuppelstange auswechseln lässt, indem z. B. der Rotor über eine lösbare Trennstelle lösbar an das Kupplungsgelenk angeschlossen ist (vgl. z. B. DE 10 2010 037 440 B4).

Grundsätzlich kommen im Rahmen der Erfindung aber auch Exzenterschneckenpumpen anderer Bauart und auch wartungsoptimierte Exzenterschneckenpumpen anderer Bauart in Betracht.

Optional kann die Exzenterschneckenpumpe mit einer Zerkleinerungsvorrichtung für das Material ausgerüstet sein. Dieses ist dann vorteilhaft, wenn das Material, das der Exzenterschneckenpumpe zugeführt wird, vor der Druckluftförderung und ggf. vor dem Transport durch die Pumpe noch zerkleinert werden sollte. Eine solche Zerkleinerungsvorrichtung, die auch als Maccerator bezeichnet wird, kann z. B. in die Exzenterschneckenpumpe integriert sein, vorzugsweise vor dem Stator/Rotor angeordnet sein.

Insgesamt lassen sich im Rahmen der Erfindung pastöse Medien über große Entfernungen transportieren. Die Länge der Förderleitung beträgt vorzugsweise mehr als 25 Meter, z. B. mehr als 50 Meter, insbesondere mehr als 100 Meter, besonders bevorzugt mehr als 200 Meter. Endseitig kann an die Förderleitung ein Speicher, z. B. ein Silo oder dergleichen angeschlossen sein. Die Absenkung des Druckniveaus auf die beschriebenen Werte ermöglicht den Einsatz der bereits beschriebenen Easy Maintenance-Pumpen. Außerdem lassen sich aufgrund des geringen Druckniveaus der Verschleiß verringern und damit die Lebensdauer der Komponenten erhöhen und Wartungszyklen verlängern. Der Platzbedarf der Einzelkomponenten ist gering. Ebenso sind die Betriebskosten gering aufgrund des niedrigen Energieverbrauchs und der langen Wartungszyklen und der günstigen Ersatzteile. Außerdem können die Gesamtinvestitionskosten reduziert werden, da aufgrund des geringen Druckniveaus mit einer kostengünstigen Verrohrung, d. h. mit dünnwandigeren und günstigeren Rohrleitungen gearbeitet werden kann. Es lässt sich ein automatisiertes System inklusive Prozessüberwachung realisieren, das sich über gängige Busschnittstellen ins bestehende Automatisierungs- und Leitsysteme einbinden lässt. Ferner ergeben sich arbeitsschutztechnische Vorteile aufgrund des geringeren Teilegewichts, wodurch wenige Personen zur Wartung benötigt werden. Bei kleinen Pumpen kann die Wartung von einer einzigen Person ohne zusätzliche Hebe- oder Krananlagen durchgeführt werden.

Im Folgenden wird die Erfindung anhand von Zeichnungen erläutert, die lediglich Ausführungsbeispiele darstellen. Es zeigen
Fig. 1A bis 1D eine Anlage in einer vereinfachten Ansicht in verschiedenen Funktionsstellungen,
Fig. 2 eine abgewandelte Ausführungsform der Anlage nach Fig. 1A,
Fig. 3 ein Betriebsdiagramm einer Anlage nach Fig. 1A bis 1D, (Druck in der Förderleitung in Abhängigkeit von der Zeit),
Fig. 4 eine Ausführungsform einer Exzenterschneckenpumpe der Anlage nach Fig. 1A bis 1D.

In den Figuren ist eine Anlage zur Förderung von pastösem Material, z. B. von (entwässertem) Schlamm oder zerkleinerten Lebensmittelabfällen dargestellt.

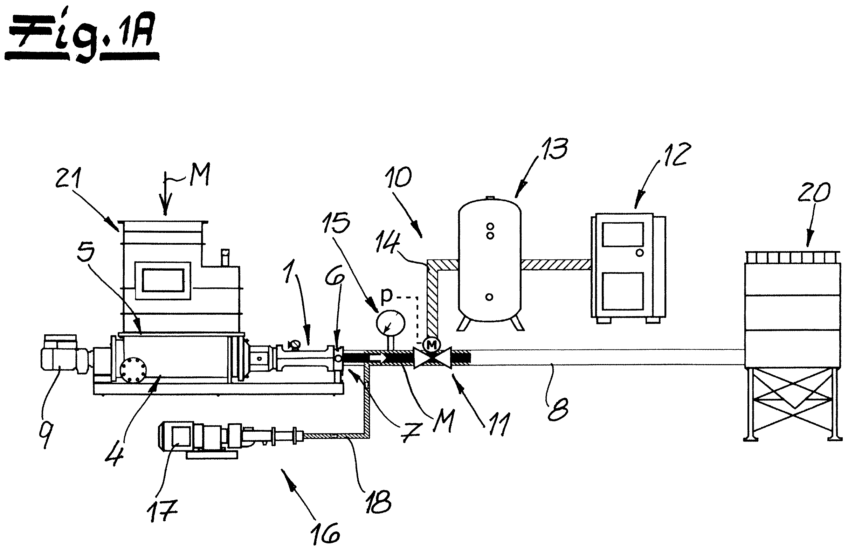

Die Figuren 1A bis 1D zeigen dabei eine erste Ausführungsform einer solchen Anlage in verschiedenen Funktionsstellungen, wobei diese Anlage z. B. für die Förderung von pastösem Material M in Form von entwässertem Schlamm verwendet werden kann.

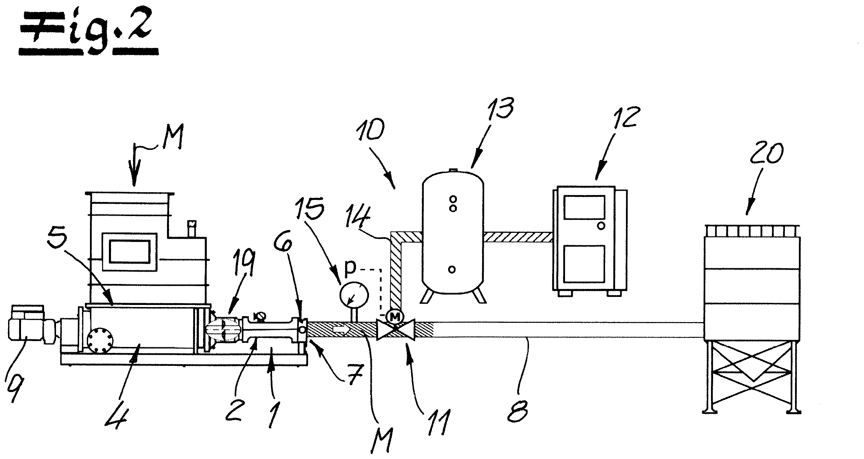

Demgegenüber zeigt Fig. 2 eine zweite Ausführungsform, die z. B. für die Förderung von pastösem Material M in Form von zerkleinerten Lebensmittelabfällen verwendet werden kann.

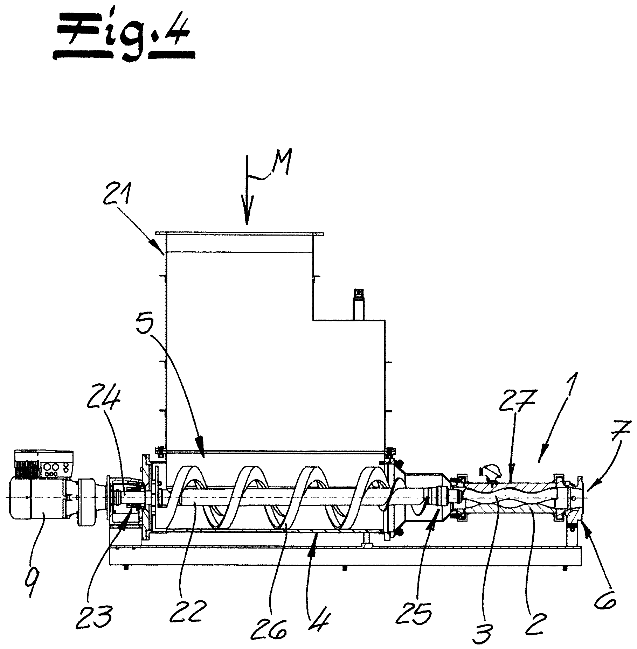

Die Anlage weist eine Exzenterschneckenpumpe 1 auf, die einen Stator 2 (aus elastischem Material) und einen in dem Stator rotierenden Rotor 3 aufweist. Ferner weist die Exzenterschneckenpumpe ein saugseitig an den Stator angeschlossenes Sauggehäuse 4 mit einer Einfüllöffnung 5 und ein druckseitig an den Stator angeschlossenes Druckgehäuse 6 mit einer Auslassöffnung 7 auf. Die Pumpe ist mit einem Antrieb 9 für den Rotor 3 versehen. Weitere Einzelheiten zum Aufbau einer solchen Exzenterschneckenpumpe 1 werden im Folgenden noch anhand der Fig. 4 erläutert.

Die Anlage weist ferner eine an die Auslassöffnung 7 der Exzenterschneckenpumpe 1 (unmittelbar) angeschlossene pneumatische Förderleitung 8 auf. Diese Förderleitung 8 ist derart an die Auslassöffnung 7 bzw. an das Druckgehäuse 6 angeschlossen, dass das zu fördernde Material M mit der Exzenterschneckenpumpe 1 als komprimierter Materialstrang in die Förderleitung gedrückt wird. An die Förderleitung 8 ist außerdem über ein Ventil 11 eine Druckmedienzufuhr 10 angeschlossen, die im Ausführungsbeispiel als Druckluftzufuhr 10 ausgebildet ist, mit der in zeitlichen Abständen Druckpulse in die Förderleitung 8 injizierbar sind. Mit diesen Druckpulsen sind von dem komprimierten Materialstrang Materialpfropfen MP begrenzter Länge abtrennbar und durch die Förderleitung 8 transportierbar. Darauf wird im Folgenden noch näher eingegangen. Endseitig an die Förderleitung ist ein Speicher, z. B. ein Silo 20 angeschlossen, so dass das der Exzenterschneckenpumpe 1 zugeführte Material M durch die Exzenterschneckenpumpe 1 und die Förderleitung 8 in das Silo 20 gefördert wird, und zwar über eine verhältnismäßig lange Transportstrecke von z. B. mehr als 100 Meter.

An die Förderleitung 8 ist außerdem eine Druckmesseinrichtung 15 angeschlossen. Sowohl die Druckmesseinrichtung 15 als auch das Druckluftventil 11 sind bevorzugt mit einer nicht dargestellten Steuereinrichtung verbunden. Die Druckmedienzufuhr 10 kann einen Kompressor 12, einen Windkessel 13 und eine Druckluftleitung 14 aufweisen.

Außerdem ist bei der Ausführungsform nach Figuren 1A bis 1D an die Förderleitung 8 eine Gleitmittelzufuhr 16 angeschlossen, die im Ausführungsbeispiel eine Pumpe 17 und eine Leitung 18 umfasst. Die Gleitmittelzufuhr bzw. der Anschluss der Gleitmittelzufuhr 16 an die Förderleitung ist zwischen der Exzenterschneckenpumpe und der Druckluftzufuhr 10 bzw. Anschluss der Druckluftzufuhr 10 an die Förderleitung 8 angeordnet. Mit Hilfe dieser Gleitmittelzufuhr 16 ist ein Gleitmittel, z. B. eine Polymerlösung in die Druckleitung 8 bzw. in den Bereich des Materialstrangs injizierbar.

Die Exzenterschneckenpumpe 1 ist im Ausführungsbeispiel als Trichterpumpe ausgebildet, wobei an die Einfüllöffnung 5 ein Einfülltrichter 21 angeschlossen ist. Einzelheiten sind in Fig. 4 dargestellt, auf die im Folgenden noch eingegangen wird.

### Die Anlage gemäß Figuren 1A bis 1D wird z. B. wie folgt betrieben:

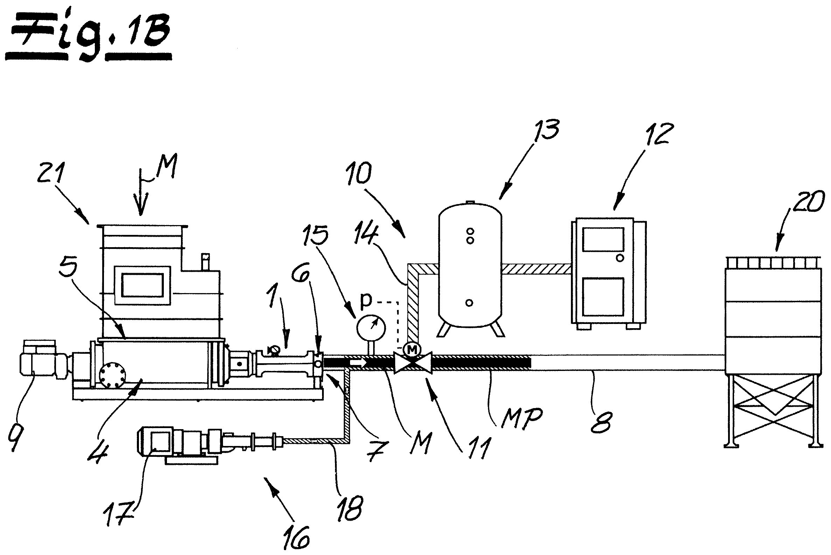

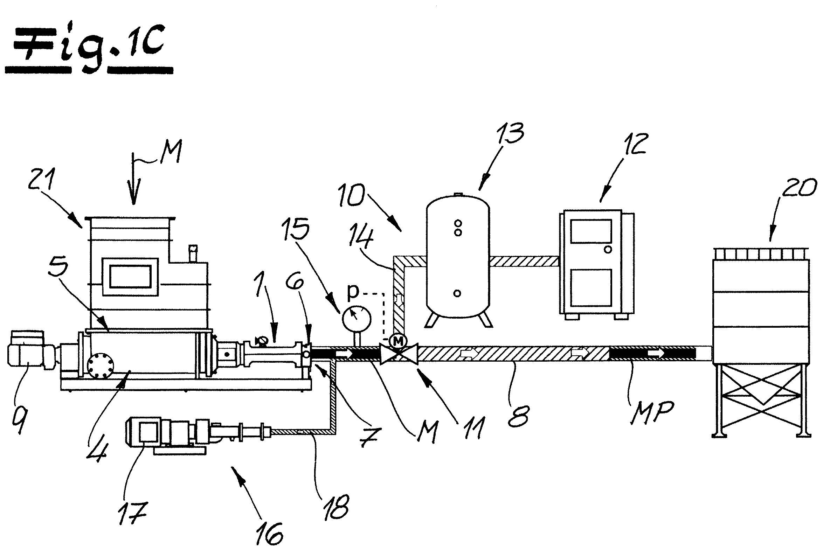

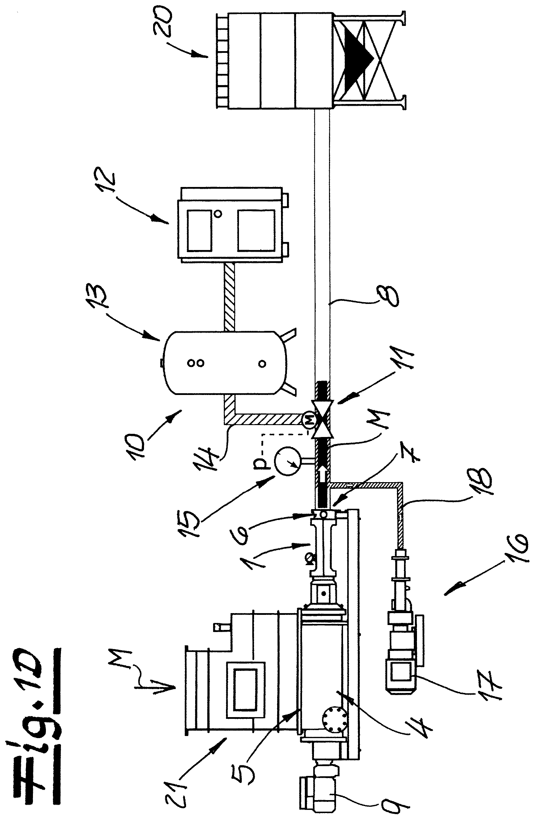

Die Exzenterschneckenpumpe 1 wird über den Trichter 21 mit dem zu fördernden Material, z. B. entwässerten Schlamm beschickt. Der Schlamm M wird mittels der Trichterpumpe 1 in die Förderleitung bzw. Druckleitung 8 komprimiert (vgl. Fig. 1A). Dabei wird die Förderleitung zugleich (kontinuierlich) über die Gleitmittelzufuhr 16 mit einem Gleitmittel, z. B. einer Polymerlösung beschickt. Im Zuge des komprimierten Zuführens des Schlamms in die Förderleitung 8 steigt der mit der Druckmesseinrichtung 15 überwachte Druck in der Förderleitung 8 nach und nach an. Bei Erreichen oder Überschreiten eines vordefinierten Druckschwellwertes (Fig. 1B) wird durch Öffnen des Ventils 11 ein Druckluftpuls in die Förderleitung 8 injiziert und dadurch von dem komprimierten Materialstrang ein Materialpfropfen MP begrenzter Länge abgetrennt und durch die Förderleitung 8 transportiert (Fig. 1C). Eine vergleichende Betrachtung der Figuren 1C und 1D deutet an, dass auf diese Weise der Druck in der Förderleitung wieder fällt und der beschriebene Prozess beginnt wieder mit Fig. 1A.

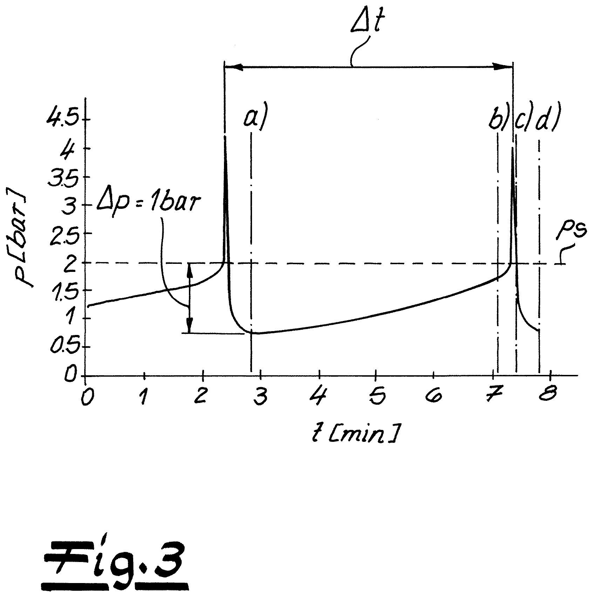

Die Funktionsweise lässt sich auch anhand von Fig. 3 verdeutlichen, die den Druckverlauf an der der Injektionsstelle der Förderleitung 8 grafisch darstellt. Gezeigt ist in dem Diagramm der Druck p in der Förderleitung, gemessen mit der Druckmesseinrichtung 15, d. h. im Bereich der Injektionsstelle 10, und zwar in Abhängigkeit von der Zeit t. Beginnend mit der Zeit 0 ist zunächst erkennbar, wie im Zuge des Zuführens des Materials in die Förderleitung 8 entsprechend Fig. 1A der Druck p steigt und (nach etwas mehr als zwei Minuten) den Druckschwellwert ps erreicht (entsprechend Fig. 1B). Zu diesem Zeitpunkt wird der Druckpuls injiziert, so dass der Druck p schlagartig auf einen Wert von etwa 4 bar ansteigt und dann sofort wieder auf einen Wert deutlich unterhalb des Druckschwellwertes ps absinkt (entsprechend Figuren 1C und 1D). Im Ausführungsbeispiel sinkt der Druck p in der Leitung 8 um etwa 1 bar unterhalb des Druckschwellwertes. Anschließend wird mit der Exzenterschneckenpumpe über einen Zeitraum von einigen Minuten ein neuer Schlammpfropfen in die Leitung gefördert, bis eine weitere Druckluftinjektion erfolgt. Die in Fig. 3 dargestellten Zustände a), b), c) und d) entsprechen den in den Figuren 1A bis 1D dargestellten Zuständen.

Dabei ist in der Ausführungsform nach Fig. 1A bis 1D dargestellt, dass ein Gleitmittel injiziert wird, um die Rohrreibung für die Dichtstromförderung zu reduzieren und so die Energieeffizienz des Gesamtsystems zu verbessern.

Demgegenüber zeigt Fig. 2 eine zweite Ausführungsform, bei der auf die Gleitmittelzufuhr verzichtet wird. Diese Ausführungsform ist für solches Material geeignet, das bereits ausreichende Reibungseigenschaften besitzt, z. B. zerkleinerte Lebensmittelabfälle bzw. pastöser Lebensmittelbrei. Die Anlage dient z. B. zur Förderung von Lebensmittelabfällen über große Distanzen, z. B. in eine entfernte Biogas-Anlage. Die Lebensmittelabfälle bzw. der Lebensmittelbrei gelangt über eine lange Förderleitung 8 in den dargestellten Speicher 20.

Dabei können mehrere Prozessschritte für die Aufbereitung zur Verbrennung von Lebensmittelabfällen in einer Biogas-Anlage in diesem System auf sehr kleinem Raum integriert werden. Die Exzenterschneckenpumpe 1 ist wiederum als Trichterpumpe ausgebildet, die sich von der in Fig. 1A dargestellten Exzenterschneckenpumpe dadurch unterscheidet, dass zusätzlich eine Zerkleinerungsvorrichtung 19 vorgesehen ist, die im Ausführungsbeispiel in die Exzenterschneckenpumpe integriert ist, z. B. zwischen Trichter 21 und Stator 2. Sie ist als Schneidwerkzug ausgebildet bzw. mit einem Schneidwerkzeug ausgebildet, so dass zunächst das eingebrachte Material, z. B. ganze Früchte oder Gemüse bzw. Reste, zerkleinert und anschließend in die Druckleitung 8 als pastöser Lebensmittelbrei komprimiert werden. Im Übrigen ist die Anlage - abgesehen von der Gleitmittelzufuhr - in derselben Weise aufgebaut wie gemäß Figuren 1A bis 1D und sie wird auch in derselben Weise betrieben.

Wie bereits erwähnt ist die Exzenterschneckenpumpe in den Ausführungsbeispielen bevorzugt als Trichterpumpe ausgebildet. Eine mögliche Ausführungsform ist in Fig. 4 dargestellt. Der Antrieb 9 arbeitet über eine Kuppelstange 22 auf den Rotor 3, wobei die Kuppelstange 22 im Ausführungsbeispiel mit einem Förderwerkzeug 26, z. B. einer Schnecke versehen ist, um die Förderung des Materials in den Bereich des Rotors bzw. des Stators zu unterstützen. Die Kuppelstange 22 ist über ein eingangsseitiges Gelenk 23 an den Antrieb bzw. eine Antriebswelle oder Verbindungswelle 24 und über ein rotorseitiges Gelenk 25 an den Rotor 2 angeschlossen, so dass über die Kuppelstange 22 und die Gelenke 23, 24 die exzentrische Bewegung des Rotors 3 ermöglicht bzw. realisiert wird.

Die Exzenterschneckenpumpe 1 ist dabei als sogenannte Easy-Maintenance-Pumpe ausgebildet, bei der sich sowohl der Stator 2 als auch der Rotor 3 ohne Entfernen des Sauggehäuses 4 und ohne Entfernen des Druckstutzens 6 bzw. der angeschlossenen Leitungen und insbesondere auch ohne Entfernen des Trichters 21 austauschen lassen. Dazu ist im Ausführungsbeispiel der Stator 2 als längsgeteileter Stator ausgebildet, der aus z. B. zwei Statorhälften besteht. Einzelheiten sind nicht dargestellt. Der den elastomeren Stator umgebende Statormantel 27 besteht bevorzugt aus mehreren Mantelsegmenten, die zum einen eine Statorspannvorrichtung bilden und zum anderen eine einfache Demontage und einfachen Statoraustausch ermöglicht. Außerdem kann der Rotor 3 über eine zusätzliche Trennstelle an das rotorseitige Kupplungsgelenk angeschlossen sein, so dass sich der Rotor 3 ohne Gelenktrennung austauschen lässt. Auch dazu sind Einzelheiten nicht dargestellt, es kann jedoch insgesamt auf die in der DE 10 2010 037 449 B4, DE 10 2014 112 550 B4, DE 10 2014 112 552 B4 oder DE 10 2008 021 920 A1 bekannten Konzepte zurückgegriffen werden.

## Patentansprüche

1. Verfahren zur Förderung von pastösem Material (M) z. B. Schlamm oder zerkleinerten Lebensmittelabfällen, mit einer Anlage, welche
eine Exzenterschneckenpumpe (1) aufweist, die einen Stator (2), einen in dem Stator (2) rotierenden Rotor (3), ein an den Stator angeschlossenes Sauggehäuse (4) mit Einfüllöffnung (5) und eine Auslassöffnung (7) aufweist,
und eine pneumatischen Förderleitung (8) aufweist, die derart an die Auslassöffnung (7) der Exzenterschneckenpumpe (1) angeschlossen ist, dass das zu fördernde Material (M) mit der Exzenterschneckenpumpe (1) als komprimierter Materialstrang in die Förderleitung (8) gepresst wird, sowie eine Steuereinrichtung aufweist,
wobei an die Förderleitung (8) über zumindest ein Ventil (11) eine Druckmedienzufuhr (10) angeschlossen ist, wobei die Steuereinrichtung mit dem Ventil (11) der Druckmedienzufuhr verbunden ist und mit der Steuereinrichtung das Ventil (11) derart gesteuert wird, dass in zeitlichen Abständen Druckpulse in die Förderleitung (8) injiziert werden, wobei mit den Druckpulsen von dem komprimierten Materialstrang Materialpfropfen (MP) begrenzter Länge abgetrennt und durch die Förderleitung (8) transportiert werden**,**
wobei die Anlage derart gesteuert wird, dass der Druck in der Förderleitung einen oberen Grenzwert von 5 bar nicht überschreitet,
wobei
- an die Förderleitung (8) eine Druckmesseinrichtung (15) angeschlossen ist, die mit der Steuereinrichtung verbunden ist, so dass das Ventil (11) in Abhängigkeit von dem mit der Druckmesseinrichtung (15) gemessenen Druck in der Förderleitung (8) gesteuert wird, wobei die Druckpulse in Abhängigkeit von dem Druck in der Förderleitung (8) erzeugt werden, und zwar jeweils bei Erreichen oder Überschreiten eines vorgegebenen Druckschwellwertes,
oder
- wobei die Druckpulse jeweils eine vorgegebene Dauer haben.

2. Verfahren nach Anspruch 1, wobei die Exzenterschneckenpumpe (1) als Trichterpumpe ausgebildet ist, wobei an die Einfüllöffnung (5) ein Einfülltrichter (21) angeschlossen ist, wobei vorzugsweise die Kuppelstange (22) zwischen Antrieb (9) und Rotor (3) mit Förderwerkzeugen (2) versehen ist.

3. Verfahren nach Anspruch 1 oder 2, wobei die Förderleitung (8) eine Länge von mehr als 25 Meter, insbesondere mehr als 100 Meter, vorzugsweise mehr als 200 Meter aufweist, wobei bevorzugt endseitig an die Förderleitung ein Materialspeicher, z. B. ein Silo (20), angeschlossen ist.

4. Verfahren nach einem der Ansprüche 1 bis 3, wobei an die Förderleitung (8) eine Gleitmittelzufuhr (16) angeschlossen ist, vorzugsweise zwischen Exzenterschneckenpumpe (1) und Druckmedienzufuhr (10), mit der ein Gleitmittel, z. B. Wasser oder eine Polymerlösung, in die Druckleitung (8) injiziert wird.

5. Verfahren nach einem der Ansprüche 1 bis 4, wobei der elastische Stator (2) ohne Entfernen des Sauggehäuses (4) und/oder des Druckgehäuses (6) austauschbar ist, z. B. als längsgeteilter Stator (2) ausgebildet ist.

6. Anlage nach einem der Ansprüche 1 bis 5, wobei der Rotor (3) ohne Entfernen des Sauggehäuses (4) und/oder des Druckgehäuses (6) austauschbar ist, z. B. wobei der Rotor (3) eine Trennstelle oder Gehäuseöffnung im Bereich des Gelenkes aufweist.

7. Verfahren nach einem der Ansprüche 1 bis 6, wobei die Druckpulse jeweils eine vorgegebene Dauer, von 1 Sekunde bis 20 Sekunden haben und/oder wobei die Dauer der Druckpulse jeweils variabel in Abhängigkeit von dem Druck in der Förderleitung gesteuert wird.

8. Verfahren nach einem der Ansprüche 4 bis 7, wobei in die Förderleitung (8) ein Gleitmittel injiziert wird, wobei vorzugsweise die Menge des injizierten Gleitmittels in Abhängigkeit von dem Druck in der Förderleitung gesteuert wird.

9. Verfahren nach einem der Ansprüche 1 bis 8, wobei das in die Einfüllöffnung (5) der Exzenterschneckenpumpe (1) eingefüllte Material zerkleinert wird, bevorzugt bevor es in die Förderleitung (8) gelangt, vorzugsweise in der Exzenterschneckenpumpe (1) vor dem Stator (2).

10. Verfahren nach einem der Ansprüche 1 bis 9, wobei die Anlage derart gesteuert wird, dass der Druck in der Förderleitung einen oberen Grenzwert, von 4 bar nicht überschreitet.

## Claims

1. A method for conveying paste-like material (M), e.g. sludge or comminuted food wastes using a plant which has a progressive cavity pump (1), which has a stator (2), a rotor (3) rotating in the stator (2), a suction housing (4), which is connected to the stator, having a filling opening (5) and an outlet opening (7), and has a pneumatic conveying pipe (8) which is connected in such a manner to the outlet opening (7) of the progressive cavity pump (1) that the material (M) to be conveyed using the progressive cavity pump (1) is pressed as a compressed material strand into the conveying pipe (8), and also has a control device,
wherein a pressure medium supply (10) is connected to the conveying pipe (8) by means of at least one valve (11), wherein the control device is connected to the valve (11) of the pressure medium supply and the valve (11) is controlled in such a manner using the control device that pressure pulses are injected into the conveying pipe (8) at time intervals, wherein material plugs (MP) of limited length are separated from the compressed material strand using the pressure pulses and transported through the conveying pipe (8),
wherein the plant is controlled in such a manner that the pressure in the conveying pipe does not exceed an upper pressure limit value of 5 bars,
wherein
- a pressure measuring device (15) is connected to the conveying pipe (8), which pressure measuring device is connected to the control device so that the valve (11) is controlled depending on the pressure in the conveying pipe (8) that is measured using the pressure measuring device (15), wherein the pressure pulses are generated depending on the pressure in the conveying pipe (8), specifically when a specified pressure threshold value is reached or exceeded in each case,
or
- wherein the pressure pulses have a specified duration in each case.

2. The method according to Claim 1, wherein the progressive cavity pump (1) is designed as a hopper pump, wherein a feed hopper (21) is connected to the filling opening (5), wherein the coupling rod (22) is preferably provided with conveying tools (2) between drive (9) and rotor (3).

3. The method according to Claim 1 or 2, wherein the conveying pipe (8) has a length of more than 25 metres, particularly more than 100 metres, preferably more than 200 metres, wherein a material store, e.g. a silo (20) is preferably connected to the end of the conveying pipe.

4. The method according to one of Claims 1 to 3, wherein a lubricant supply (16) is connected to the conveying pipe (8), preferably between progressive cavity pump (1) and pressure medium supply (10), using which a lubricant, e.g. water or a polymer solution, is injected into the pressure line (8).

5. The method according to one of Claims 1 to 4, wherein the elastic stator (2) is replaceable without removing the suction housing (4) and/or the pressure housing (6), e.g. is designed as a longitudinally split stator (2).

6. The method according to one of Claims 1 to 5, wherein the rotor (3) is replaceable without removing the suction housing (4) and/or the pressure housing (6), e.g. wherein the rotor (3) has a point of separation or housing opening in the region of the joint.

7. The method according to one of Claims 1 to 6, wherein the pressure pulses in each case have a specified duration of 1 second to 20 seconds and/or wherein the duration of the pressure pulses is controlled in each case in a variable manner depending on the pressure in the conveying pipe.

8. The method according to one of Claims 4 to 7, wherein a lubricant is injected into the conveying pipe (8), wherein the quantity of the injected lubricant is preferably controlled depending on the pressure in the conveying pipe.

9. The method according to one of Claims 1 to 8, wherein the material poured into the filling opening (5) of the progressive cavity pump (1) is comminuted, preferably before it reaches the conveying pipe (8), preferably in the progressive cavity pump (1) upstream of the stator (2).

10. The method according to one of Claims 1 to 9, wherein the plant is controlled in such a manner that the pressure in the conveying pipe does not exceed an upper pressure limit value of 4 bars.

## Revendications

1. Procédé de transport de matière pâteuse (M), par exemple des boues ou de déchets de denrées alimentaires broyés, avec une installation, laquelle comporte une pompe à vis excentrée (1), qui comporte un stator (2), un rotor (3) tournant dans le stator (2), un carter d'aspiration (4) raccordé au stator avec une ouverture de remplissage (5) et une ouverture de sortie (7),
et comporte une conduite de transport pneumatique (8), qui est raccordée à l'ouverture de sortie (7) de la pompe à vis excentrée (1) de telle manière que le matériau à transporter (M) est pressé avec la pompe à vis excentrée (1) dans la conduite de transport (8) sous la forme d'un boudin de matériau comprimé,
et comporte un système de commande,
sachant qu'une alimentation de milieu sous pression (10) est raccordée à la conduite de transport (8) par au moins une soupape (11), sachant que le système de commande est relié à la soupape (11) de l'alimentation de milieu sous pression et la soupape (11) est commandée par le système de commande de telle manière qu'à des intervalles de temps des impulsions de pression sont injectées dans la conduite de transport (8), sachant que des bouchons de matériau (MP) de longueur limitée sont séparés avec les impulsions de pression du boudin de matériau comprimé et sont transportés par la conduite de transport (8),
sachant que l'installation est commandée de telle manière que la pression dans la conduite de transport ne dépasse pas une valeur limite supérieure de 5 bars,
sachant qu'
- un système de mesure de pression (15) est raccordé à la conduite de transport (8), qui est reliée au système de commande de telle sorte que la soupape (11) est commandée en fonction de la pression mesurée avec le système de mesure de pression (15) dans la conduite de transport (8), sachant que les impulsions de pression sont produites en fonction de la pression dans la conduite de transport (8) et à savoir, à chaque fois, lors de l'atteinte ou du dépassement d'une valeur seuil de pression prédéfinie,
ou
- sachant que les impulsions de pression ont respectivement une durée prédéfinie.

2. Procédé selon la revendication 1, sachant que la pompe à vis excentrée (1) est constituée sous la forme d'une pompe à trémie, sachant qu'une trémie de remplissage (21) est raccordée à l'ouverture d'entrée (5), sachant de préférence que la barre d'accouplement (22) est dotée d'outils de transport (2) entre l'entraînement (9) et le rotor (3).

3. Procédé selon la revendication 1 ou 2, sachant que la conduite de transport (8) comporte une longueur de plus de 25 mètres, en particulier plus de 100 mètres, de préférence plus de 200 mètres, sachant qu'un réservoir de matériau par exemple un silo (20) est raccordé de préférence en extrémité à la conduite de transport.

4. Procédé selon l'une quelconque des revendications 1 à 3, sachant qu'une alimentation en lubrifiant (16) est raccordée à la conduite de transport (8), de préférence entre la pompe à vis excentrée (1) et l'alimentation de milieu sous pression (10), avec laquelle un lubrifiant, par ex. : de l'eau ou une solution polymère est injectée dans la conduite sous pression (8).

5. Procédé selon l'une quelconque des revendications 1 à 4, sachant que le stator élastique (2) peut être changé sans enlèvement du carter d'aspiration (4) et/ou du carter sous pression (6), est constitué par exemple, sous la forme de stator divisé longitudinalement (2).

6. Installation selon l'une quelconque des revendications 1 à 5, sachant que le rotor (3) peut être changé sans enlèvement du carter d'aspiration (4) et/ou du carter sous pression (6), par exemple, sachant que le rotor (3) comporte un point de séparation ou ouverture de carter dans la zone de l'articulation.

7. Procédé selon l'une quelconque des revendications 1 à 6, sachant que les impulsions de pression ont à chaque fois une durée prédéfinie de 1 seconde à 20 secondes et/ou sachant que la durée des impulsions de pression est respectivement commandée à chaque fois de façon variable en fonction de la pression dans la conduite de transport.

8. Procédé selon l'une quelconque des revendications 4 à 7, sachant qu'un lubrifiant est injecté dans la conduite de transport (8), sachant de préférence que la quantité du lubrifiant injecté est commandée en fonction de la pression dans la conduite de transport.

9. Procédé selon l'une quelconque des revendications 1 à 8, sachant que le matériau introduit dans l'ouverture d'entrée (5) de la pompe à vis excentrée (1) est broyé, de préférence avant qu'il ne parvienne dans la conduite de transport (8), de préférence dans la pompe à vis excentrée (1) avant le stator (2).

10. Procédé selon l'une quelconque des revendications 1 à 9, sachant que l'installation est commandée de telle manière que la pression dans la conduite de transport ne dépasse pas une valeur limite supérieure de 4 bars.
